# EUROPEAN PATENT SPECIFICATION

(11) **EP 4 522 776 B1**
(45) Date of publication and mention of the grant of the patent: **26.08.2026**
(21) Application number: 23725667.2
(22) Date of filing: 08.05.2023
(51) Int. Cl.: C22B 1/00, C22B 7/00, C22B 23/02, H01M 10/54

(54) **RECOVERY OF NICKEL AND COBALT FROM BLACK MASS**
WIEDERGEWINNUNG VON NICKEL UND KOBALT AUS BLACK MASS
RÉCUPÉRATION DE NICKEL ET DE COBALT À PARTIR DE BLACK MASS

(30) Priority: 13.05.2022 WO PCT/EP2022/063010; 29.07.2022 EP 22187712
(43) Date of publication of application: 19.03.2025
(73) Proprietor: Umicore, 1000 Brussels (BE)
(72) Inventor: YAGI, Ryohei, 2250 Olen (BE); SCHEUNIS, Lennart, 2250 Olen (BE)
(86) International application number: PCT/EP2023/062144
(87) International publication number: WO 2023/217710

(56) References cited:
- WO-A1-2022/248245
- AU-B2- 509 658
- CN-A- 111 129 632
- US-A1- 2017 229 744
- REN GUOXING ET AL: "RECOVERY OF VALUABLE METALS FROM SPENT LITHIUM-ION BATTERIES BY SMELTING REDUCTION PROCESS BASED ON MnO-SiO 2 -Al 2 O 3 SLAG SYSTEM", 1 January 2016 (2016-01-01), XP055663537, Retrieved from the Internet <URL:https://www.pyrometallurgy.co.za/MoltenSlags2016/Manuscripts/Recovery%20of%20Valuable%20Metals%20from%20Spent%20Lithium-Ion.pdf> [retrieved on 20200130]

## Description

The present invention lies in the field of pyrometallurgy and concerns the recovery of Ni and Co from Li-ion batteries or their waste, more particularly from Black Mass. Electric vehicles have seen unprecedented growth in recent years, among others driven by new legislation in Europe and China, designed to gradually reduce the CO₂ footprint of car fleets and to limit the air pollution in cities. This growth is expected to continue during the next decades. The adoption of electric vehicles greatly depends on the performance of batteries used to store electric energy. To obtain the highest energy density while keeping the costs under control, rechargeable Li-ion batteries are a preferred choice. Many of these batteries contain cathodes based on the transition metals Ni, Mn and Co, and are therefore also known as NMC batteries. With the growth of the electric mobility market, the demand for these metals is also expected to increase significantly.

The demand for Ni and Co may even surpass the worldwide production capacity. Co is particularly critical as it is only produced as a by-product of the Ni and Cu industry today. The nickel market is significantly larger than the cobalt market. Most of the Ni goes to the production of stainless steel, where the purity of Ni is less important. High purity Ni and high purity Co metals or compounds are however already in short supply. In view of the above, recovering Ni and Co from spent Li-ion batteries or their waste is therefore an attractive proposal, which is also known as circular economy for batteries.

In particular, so-called "Black Mass" (BM) or "Black Matter" is a very interesting starting material for recycling. While the expression Black Mass is frequently used in industry, the exact composition may vary significantly, depending on producer or application. Typically, end-of-life batteries are dismantled and shredded, which may include separation of casing materials, foils and/or anodes. Sometimes they are also pre-processed. Black Mass resulting from such processes is usually characterized by a relatively low aluminium content, as compared to the treatment of complete batteries. On the other hand, it contains rather high amounts of lithium, manganese, cobalt and/or nickel.

Facilities for recycling batteries and battery waste often use hydro-metallurgical processes for the treatment of Black Mass, resulting in salts or metal hydroxides. Pyrometallurgical refining processes are less common, whereas combined pyro-hydro processes as according to the present invention are still a rare exception.

Known pyrometallurgical processes for recycling Li-ion batteries reduce nickel, cobalt and copper oxides in a furnace to their respective metals, and concentrate them in an alloy phase at high temperature. Other compounds, such as lithium and manganese, oxidize to Li₂O and MnO, and report to the slag.

Running such high temperature processes leads to wear or corrosion of the furnace walls over time. Typically, furnace walls are made of refractory bricks. The most commonly used bricks are based on magnesia. Typical magnesia bricks contain more than 90% of magnesia, while magnesia-chrome bricks contain 50 to 70%. It has been observed that magnesia is dissolved by common slags during operation of the furnace. This wear or corrosion is a recurring problem, resulting in high maintenance costs, as the furnace needs to be shut down and the refractory bricks need to be replaced at regular intervals. The problem is even more pronounced at higher operating temperatures, such as for example above 1550 °C.

It is therefore an aim of the present invention, not only to provide an efficient process for the recovery of Ni and Co from Li-ion batteries or their waste, in particular from Black Mass, but also to increase the lifetime of the furnace. This is achieved by operating with a dedicated MnO- and Li₂O-rich slag system, having a controlled composition designed to limit the corrosion of magnesia-bearing refractory bricks.

WO2017121663 describes slag compositions produced in an industrial process and discloses effects of MnO on slag viscosity and cobalt recovery. The main slag components described therein are CaO, SiO₂, Al₂O₃, Li₂O, and MnO or MnO₂. Disclosed MnO concentrations in those slags are very low and the teaching is to limit the amount of MnO in the slag.

Wittkowski et al. (Speciation of Manganese in a Synthetic Recycling Slag Relevant for Lithium Recycling from Lithium-Ion Batteries: Metals, vol. 11(2), 2021, p. 188.) analyse the phase composition of different Li-containing slags related to the recycling of Li-ion batteries. Black Mass is not mentioned as starting material. All reported slags are characterized by MnO contents well below those according to the present invention.

More recent Li-ion batteries, on the other hand, typically contain an increasing amount of Mn. This leads to slag compositions with a higher MnO content.

WO 2022/248245 shows a process for the recovery of nickel and cobalt from lithium ion batteries or their waste comprising the steps of
- Providing a furnace lined with magnesia-bearing refractory bricks;
- Providing a charge comprising slag formers and Lithium ion batteries or their waste, wherein the content of aluminum is the charge is less than 8%; and
- Smelting the charge in reducing conditions, thereby obtaining an alloy containing the major part of the nickel and cobalt and a lithium-containing slag, wherein the slag has a percent composition by weight according to:
- 25% < MnO < 70%;
- Al₂O₃ + 0.5 MnO < 45%
- SiO₂ > 5%;
- Li₂O > 1%;
- MnO + Li₂O + Al₂O₃ + CaO + SiO₂ + FeO + MgO + P₂O₅ > 90%; and, wherein (CaO + 2 Li₂O + 0.4 MnO) / SiO₂ ≥ 2.0.

It does, however, not disclose a P₂O₅ content of from 0.5% to 10%.

Ren Guoxing et al., "Recovery of valuable metals from spent lithium-ion batteries by smelting reduction process based on MnO-SiO2-Al2O3 slag system", TMS (The Minerals & Materials Society), January 1, 2016, Proceedings of the 10th International Conference on molten slags, fluxes and salts discloses a process for recovering cobalt, nickel, copper, manganese and lithium from spent lithium-ion batteries, comprising the steps of
- roasting polymer-containing spent lithium-ion battery material in an oxidizing atmosphere at a temperature of around 800°C to remove carbonaceous binder;
- shredding the roasted material and combining with shredded battery packs with aluminum housing in a mass ratio of approximately 1:1, and mixing with a source of manganese dioxide, from 1 to 2 parts by mass of said source per 1 part total shredded material, from 5 to 7% by weight SiO₂, from 1 to 3% by weight CaO;
- smelting this mixture in a refractory crucible at a temperature of about 1475°C for a residence time of about 30 minutes to obtain a)a metal alloy phase containing Co, Ni, Cu and Fe, and b)a slag phase enriched in Mn and Li, comprising an MnO-SiO₂-Al₂O₃ system with an MnO/SiO₂ mass ratio of about 2.0-3.3 and an Al₂O₃ content of about 19-27 % by weight;
- separating the alloy phase from the slag phase and leaching the slag phase in an aqueous sulfuric acid solution having a concentration of at least 1.0 (w/w), at 85°C for about 60 minutes, thereby solubilizing lithium and manganese. The process presents an approach to fully recover Co, Ni, Cu, Mn, and Li from spent lithium-ion batteries using a Mn-specific slag system. The process achieves near-complete recovery of transition metals and high leachability of Mn and Li.

WO12140951, WO13080266 and WO20013294 propose processes to recycle Li-ion battery scrap to recover Ni and Co, while fixing impurities such as Fe and P in the slag phase. Although stating that Mn could be a component of the obtained slag, a preferred range or a particular effect of MnO in such slags is not specified.

CN103924088 and EP3269832 describe bath smelting processes for waste batteries, producing a Co and/or Ni containing alloy and a SiO₂ and MnO-rich slag. The content of Li in such slags is not mentioned, nor is any effect of MnO or Li₂O. Black Mass is not mentioned as starting material.

CN105838895 and Xiao et al. (Recovery of Valuable Metals from Spent Lithium-Ion Batteries by Smelting Reduction Process Based on MnO-SiO2-Al2O3 Slag System: J. Sustain. Metall., vol. 3, 2017, pp. 703-710) describe compositions of slag produced by smelting Li-ion batteries and leaching processes to extract Li and Mn from the resulting slags. What has been disclosed is a method for extracting lithium and manganese from lithium-containing manganese-rich slag, while specific slag properties are not discussed. Typical slags are rich in MnO, SiO₂ and Al₂O₃, while the content of Li2O is quite low in all given examples.

Vest et al. (Slag design for lithium recovery from spent batteries: Int. Work. Met. Interact., vol. 9 (93), 2010, pp. 93-106.) describe theoretical calculations of different slag systems, of which some are also MnO-rich. However regarding lithium the goal is to design a slag in order to shift the Li distribution towards maximum concentrations in the flue dust, rather than to the slag. Consequently, one of the desired slag characteristics is to have a low capacity/solubility for Li₂O. EP21176046 describes a pyrometallurgical recycling process for Li-ion battery in which batteries are fed into a smelting furnace equipped with means for submerged injection of O₂-bearing gas to reduce the majority of Ni and Co. Obtained slags are treated in a second reducing smelting step, in which residual Ni and Co are extracted. The slags contain less than 20% of MnO, and have higher amounts of Al₂O₃, such as above 20% or even above 30%. Wear or corrosion of furnace walls is not mentioned. The present invention achieves a significant wear-reduction of magnesia-bearing refractory bricks in pyrometallurgical processes, which contributes to the overall economy of the present process. The following embodiments further describe the invention.

According to a first aspect of the invention, the process for the recovery of Ni and Co from Li-ion batteries or their waste, comprises the steps:
- providing a furnace lined with magnesia-bearing refractory bricks;
- providing a charge comprising slag formers and Li-ion batteries or their waste, wherein the content of Al in the charge is less than 8%; and,
- smelting the charge in reducing conditions, thereby obtaining an alloy containing the major part of the Ni and Co, and a Li-containing slag, wherein the slag has a percent composition by mass according to:
   25% < MnO < 70%;
   Al₂O₃ + 0.5 MnO < 45%;
   SiO₂ > 5%;
   Li₂O > 1%;
   0.5% < P₂O₅ < 10%;
   MnO + Li₂O + Al₂O₃ + CaO + SiO₂ + FeO + MgO + P₂O₅ > 90%; and,
   wherein (CaO + 2 Li₂O + 0.4 MnO) / SiO₂ ≥ 2.0.

By "slag formers" are meant: one or more of for example CaO, Al₂O₃ and SiO₂. Other slag formers, well known to the skilled person, may also be present. The slag forming compounds may be added as such, or they may be obtained in situ from easily oxidized metals present in the charge, such as aluminium.

By "furnace lined with magnesia-bearing refractory bricks" is meant a metallurgical furnace that is at least partially lined with such bricks, and in particular in the region in contact with the slag.

While the process is suitable for treating Li-ion batteries or their waste, other materials could also be included in the metallurgical charge. Mixed hydroxide precipitate (MHP) could for example be added: such products often contain useful concentrations of Co, Ni, and Mn, along with Mg. Co and Ni is recovered in the alloy, while Mn and Mg report to the slag where they play a useful role in protecting the lining. Combining battery materials with MHP also optimizes the total energy consumption as batteries tend to be exothermic while MHP is endothermic during smelting. The total charge could advantageously contain up to 30% by weight of MHP.

Except for MHP, the compounds not originating from Li-ion batteries or their waste should preferably be limited to less than 25%, more preferably to less than 15%, in the total charge.

According to a further embodiment, the Li-ion batteries or their waste is Black Mass.

The expression "Black Mass" is typically used in industry to describe an intermediate product originating from Li-ion batteries or their waste, such as new or waste Li-ion batteries, spent or end-of-life batteries, production or battery scrap, electrode materials or other pre-processed battery materials. The batteries are usually dismantled. This way, for example, Al, Fe, and Cu from casing and cabling are separated. All these battery materials are then shredded, sometimes pre-processed, for example by heat treatment to remove remaining electrolyte or graphite, resulting in a powder or filter cake, which can be further processed to briquets or pellets. In the latter case, this may comprise mixing with other compounds, not originating from Li-ion batteries or their waste, to produce those briquets or pellets.

The Black Mass should still contain appreciable amounts of Co and/or Ni to make the pyrometallurgical process economically interesting. The above-mentioned characteristics make Black Mass a preferred feed material for the described process.

By "major part" of an element or compound is meant: more than 50% by weight of the corresponding amount present in the charge. It may also include a range with a lower value selected from 55%, 60%, 65%, 70% and 75%, and an upper value selected from 80%, 85%, 90%, 95% and 100%.

According to a further embodiment, the content of MnO in the slag is 30% or more, preferably 40% or more.

The content of MnO in the slag has a key role in the present invention. A minimum of around 10% of MnO in the slag is needed to observe the effect of suppressing MgO dissolution into the slag from magnesia-bearing refractory bricks lining the furnace. Having at least 25% of MnO in the slag fully shows the effect of suppressing MgO dissolution. Having at least 30% of MnO in the slag is preferred, at least 40% is more preferred. When starting from Black Mass as feed material in the process and using a minimum amount of slag formers to save costs and keep the slag volume low, the amount of MnO in the slag will typically be above 25%.

It is beneficial to combine a MnO content of 25-70% with a relatively small volume of slag, as this concurs to suppressing the MgO dissolution.

On the other hand, the addition of more fluxing agents, thereby increasing the overall volume of the slag and diluting the percentage of MnO to below 25%, gradually increases the amount of MgO dissolving from the refractory bricks and thus has a negative influence.

The upper limit of 70% MnO in the slag helps to keep the melting point of the slag sufficiently low.

The Mn in the slag is represented by "MnO". The exact oxidation state of Mn is not always well-defined in such slags. Manganese oxide ("MnO") may thus also correspond to a mixture of the mono oxide MnO with dioxide MnO₂. The share of MnO is assumed to be well above 95%, particularly under the chosen reducing reaction conditions.

MnO typically has a green color, while MnO₂ typically has a black-brown or black-grey color, leading to its name "manganese black". Only if the content of the mono-species is high enough, the green color will prevail.

The content of P₂O₅ in the slag is 0.5% < P₂O₅ < 10%.

Phosphorus typically originates from electrolytes in the Li-ion batteries and reports to the slag as P₂O₅.

Lithium iron phosphate (LFP) batteries typically contain more phosphorous than NMC batteries, but no cobalt and nickel. In an industrial setup, recyclers may have to deal with charges that contain such LFP batteries mixed with NMC batteries, which would contribute to the overall content of phosphorus in the slag.

According to a further embodiment, the content of Al₂O₃ in the slag is less than 30%. Too high amounts of Al₂O₃, such as more than 30% or even more than 40%, increase the melting point of the slag. Heating to higher temperatures is economically less interesting and increases refractory wear.

Black Mass typically adds only limited amounts of Al₂O₃ to the slag. This is a clear difference when starting from Black Mass instead of complete Li-ion batteries, which are typically Al-rich due to their casing.

A slag composition complying with the formula Al₂O₃ + 0.5 MnO < 45% allows for slags with a relatively high MnO content, while limiting the amount of Al₂O₃.

According to a further embodiment, the slag has a percent composition by mass according to Al₂O₃ + 0.5 MnO < 30%. In this way, the amount of Al₂O₃ is further limited in slags with a relatively high MnO content, which is beneficial for protecting the magnesia-bearing refractory bricks.

According to a further embodiment, the content of CaO in the slag is 40% or less, preferably 30% or less.

CaO helps to keep the slag sufficiently fluid and ensures that it can be easily handled. CaO also helps to suppress the dissolution of MgO from the magnesia-bearing refractory bricks, as Ca and Mg share similar chemical sites in the slag. Operating the process with a preferred upper limit of 30% CaO helps to keep the melting point of the slag below 1600 °C. However, a too high amount of CaO, such as above 40%, increases the melting point of the slag and thus should be avoided.

On the other hand, an increasing amount of MnO allows for reducing the amount of CaO, due to their similarity with regards to suppressing the dissolution of MgO from the magnesia-bearing refractory bricks.

According to a further embodiment, the slag formers contain no CaO.

A MnO-rich feed even allows for avoiding CaO as slag former completely. This opens the way for exploring other slag systems than the well-known ternary slag system Al₂O₃-CaO-SiO₂, which is typically used in the prior art.

The beneficial effects of the present invention would still be achieved without CaO, as MnO in the slag has a key role in this regard.

According to a further embodiment, the content of Li₂O in the slag is more than 3%, preferably more than 6%.

It has further been observed that in addition to MnO and CaO, Li₂O also suppresses the dissolution of Mg from the magnesia-bearing refractory bricks. When recycling Li-ion batteries, the amount of Li₂O in the slag is expected to be significant.

In this regard, >3% should be particularly understood as 3.1 or more, preferably 3.2 or more, 3.3 or more, 3.4 or more, particularly also 3.5 or more, 4.0 or more, 4.5 or more, 5.0 or more, 5.5 or more. Amounts of more than 3% allow for the valorization of the lithium in the slag. But as Li₂O also suppresses the Mg-dissolution, higher amounts, such as more than 6%, are not only preferred for economical reasons, but also for their higher contribution to wear-reduction. This is particularly also true for amounts of 7% or more, 8% or more, 9% or more, 10% or more.

SiO₂ is contributing to lower the melting point of the slag. On the other hand, increasing amounts of SiO₂ have a negative effect. Therefore, according to a further embodiment, the amount of SiO₂ in the slag is less than 20%.

In a preferred embodiment, the slag composition is complying with the formula (CaO + 2 Li₂O + 0.4 MnO) / SiO₂ ≥ 2.0 .

According to a further embodiment, the content of cobalt oxide in the slag is 0.05% < CoO < 1%.

Under the applied process conditions, the major part of cobalt reports to the alloy, while only a minor part remains in the slag. Typically, concentrations of less than 1% are obtained. Completely cobalt-free slags are not obtained in industrial Li-ion battery recycling.

According to a further embodiment, the content of Fe in the slag is 25% or less, preferably 10% or less. In an FeO-rich slag containing more than 10% FeO, respectively containing even more than 25% FeO, CoO cannot be reduced to metallic Co without also transferring relatively large quantities of metallic Fe to the alloy phase. This significantly increases the costs of any hydrometallurgical follow-up treatment of the resulting alloy and is thus less desired. Moreover, Fe-containing slags at high temperatures are aggressive to magnesia-bearing refractory bricks.

Therefore, according to a preferred embodiment, the content of Fe in the charge is 5% or less. This can, for example, be achieved by separation of Fe-containing casing materials, or by keeping the amount of unwanted lithium iron phosphate (LFP) batteries in the charge sufficiently low.

Slag composition and operating temperature are critical considerations for the process described herein. The present invention achieves a balance between compounds that protect the furnace walls (e.g. MnO, CaO, Li₂O), and compounds that negatively impact the furnace walls. The slag composition domain moreover allows for a suitable fluidity of the slag and minimal overheating of the slag at the desired operating temperature. A temperature as low as possible is preferred, while still remaining above the melting point of the alloy.

This balance is reflected in the presented process conditions as well as in the composition of the slag itself.

According to a further embodiment, the step of smelting the charge is performed at a temperature of at least 1400 ° C, to ensure complete melting of the metallurgical charge, and at most 300 ° C above the liquidus point of the slag, preferably at most 100 ° C above the liquidus point of the slag. The lower limit is preferred to avoid even partial solidification of the produced alloy or slag. The upper limit is preferred to avoid overheating the slag. Higher temperatures promote the dissolution of Mg from the magnesia-bearing refractory bricks. Therefore, lower temperatures are generally preferred for wear-reduction as well as to save energy. Overheating the slag has a negative impact on the dissolution of magnesia-bearing refractory bricks by the slag.

The preferred operating temperature is below 1700 °C, more preferably below 1650 °C, even more preferably below 1600 °C, and most preferably below 1550 °C.

According to a further embodiment, the smelting step comprises the further steps:
- sampling the slag;
- cooling down the slag sample and assessing its color; and,
- in case the slag sample is green, terminating the smelting step; or,
- in case the slag sample is not green, proceeding with the smelting step after adjusting the pO₂-level to achieve more reducing conditions.

By "sampling the slag" is meant to take a small sample of the slag while the process continues under the chosen conditions.

The assessment of the color can easily be performed visually. Compared to a chemical analysis of the slag, monitoring the change of color provides for a quick and efficient indication that the slag contains a certain minimum percentage of MnO. As will be described in greater detail below, it has further been observed that the green color of the slag also indicates that the major part of Co contained in the feed is reduced, reporting to the alloy. Without being bound by theory, it is indeed believed that the change of color to green results from the reduction of MnO₂ to MnO, but also from the reduction of typically darker oxides of, for example, Fe, Ni and Co.

The visual inspection is a quick and easy way to steer the process, which can save time and operational costs.

In the present context, "green" is defined as the color with Hue, Lightness, and Chroma in the following range according to the ASTM D1535-14 (2018) standard:
- Hue from 5GY to 5BG;
- Lightness: ≥3; and,
- Chroma: ≥3.

Examples of green color are shown in "Geological Rock-Color Chart with Genuine Munsell Color Chips" produced by Munsell Color in 2009.

The operating conditions are chosen to oxidize a major part of Mn to the slag and to reduce the major part of Co and Ni to the alloy. Preferably more than 90% of Co and Ni are collected in the alloy, more preferred more than 95%, and most preferred more than 98%. The pO₂-level of the present process is easily adjusted to reach these favourable yields.

According to a further embodiment, the pO₂-level is adjusted to 10⁻⁷ > pO₂ > 10⁻¹², preferably to pO₂ < 10⁻⁸, more preferred to pO₂ < 10^{-8.5}, and most preferred to pO₂ < 10⁻⁹.

The preferred pO₂-levels of 10⁻⁸, 10^{-8.5} and 10⁻⁹, as well as the limit of 10⁻¹² indeed represent more reducing conditions as compared to a pO₂-level of 10⁻⁷ and favor high reduction yields.

According to a further embodiment, the color of the slag is green. During smelting the charge in reducing conditions, the color of the slag typically changes from black-grey or black-brown to green as the process progresses.

According to a further embodiment, the furnace is an electric furnace. Using an electrical furnace or electric arc furnace (EAF) allows for more flexibility in case higher operating temperatures are desired or needed. Another advantage is that it allows to profit from of off-peak electricity pricing, or electricity produced by eco-friendly green sources, such as local wind power plants.

A further part of the present invention describes a Li-containing metallurgical slag having a percent composition by weight according to:
25% < MnO < 70%;
Al₂O₃ + 0.5 MnO < 45%
SiO₂ > 5%;
Li₂O > 3%;
0.5% < P₂O₅ < 10%;
MnO + Li₂O + Al₂O₃ + CaO + SiO₂+ FeO + MgO + P₂O₅ > 90%; and,
wherein (CaO + 2 Li₂O + 0.4 MnO) / SiO₂ ≥ 2.0.

A further embodiment describes a Li-containing metallurgical slag, wherein the color of the slag is green. The green color is an indication that the slag contains a certain minimum percentage of MnO, which is important for the specific slag properties.

A further embodiment describes a Li-containing metallurgical slag, wherein the content of MnO in the slag is 30% or more, preferably 40% or more. Higher amounts are beneficial for protecting the furnace walls.

A further embodiment describes a Li-containing metallurgical slag, wherein the content of Al₂O₃ in the slag is less than 30%. Limiting the amount to less than 30% is beneficial for achieving a lower melting point.

A further embodiment describes a Li-containing metallurgical slag, wherein the content of CaO in the slag is 40% or less, preferably 30% or less. Slags with a relatively high amount of MnO, such as more than 40% or even more than 50%, allow for a low to very low amount of CaO. This includes slags without CaO.

The beneficial properties of the slag according to the invention to protect the furnace walls from wear or corrosion, respectively from dissolution of MgO from the magnesia-bearing refractory bricks, are maintained in all the above cases.

A further embodiment describes a Li-containing metallurgical slag, wherein the content of Fe in the slag is 25% or less, preferably 10% or less. Iron from the slag could transfer to an alloy when re-using the slag in new pyrometallurgical operations, which is not desired, as it makes any hydrometallurgical follow-up treatment of such an alloy more complicated and thus costly.

A further embodiment describes the use of the Li-containing metallurgical slag as slag former in a pyrometallurgical recycling process. The obtained metallurgical slag contains one or more of MnO, Al₂O₃, CaO and SiO₂, and thus can be used as slag former in new operations.

A further embodiment describes the use of the Li-containing metallurgical slag as slag former in the process according to the first embodiment, thereby partially or fully replacing slag formers in the step of providing a charge comprising slag formers.

Re-using the produced metallurgical slag in new operations allows for a greater flexibility in choosing operating conditions, such as the pO₂-level of the process. For example, when more oxidizing conditions are used, thereby sending more Co and/or Ni to the slag, these valuable metals would be recovered in a following operation cycle, where more reducing conditions could be used to recover more of the Co and/or Ni. A further embodiment describes therefore a Li-containing metallurgical slag, wherein the slag further contains cobalt.

When re-using this metallurgical slag as slag former in a new process cycle, it should be taken into account that incoming batteries or their waste may contain additional amounts of compounds such as Al, Mn or Li, which will end up in the slag after their oxidation. Consequently, the amounts of Al₂O₃, MnO or Li₂O in the slag will increase. Especially Al₂O₃ has a direct influence on the melting point and therefore an accumulation in the slag needs to be monitored.

Due to incoming fresh compounds, the metallurgical slag according to the invention can only be re-used for a limited number of cycles. To decide whether the slag can continue to be reused, the slag composition should be analysed and compared with the composition specifications described herein. Bleeding and re-using at least part of the metallurgical slag, or diluting it with fresh slag formers, are viable long-term options.

As described above, the slag according to the invention helps to suppress the dissolution of MgO from the magnesia-bearing refractory bricks significantly. However, it cannot be avoided completely. This leads to another positive side effect when recycling the slag. Any MgO accumulated in the slag during previous smelting operations tends to suppress, in combination with MnO, Li₂O and CaO, the further corrosion of the refractory bricks. This makes the re-use of the slag particularly attractive.

A further embodiment describes the use of the Li-containing metallurgical slag in a process for the recovery of lithium. A slag with a Li₂O-content of more than 3% allows for the valorization of the contained lithium, while higher amounts of Li₂O, such as more than 6% or even more than 8% are preferred. The recovery of lithium is particularly attractive in case the slag is repeatedly re-used, as Li₂O accumulates in the slag with every new cycle, thereby readily reaching concentrations of more than 8%, more than 10%, more than 12% or more than 14%.

Li-fuming is a preferred process for the recovery of lithium from such Li-containing metallurgical slags, as this process ensures high recovery rates. The use of alkali or earth alkali chlorides, for example CaCl₂, has been described in WO2020104164 for that purpose.

A further embodiment describes the use of the Li-containing metallurgical slag in a process for the recovery of cobalt. Re-using the slag as slag former in a process according to the first embodiment, or in other battery recycling processes, allows for the recovery of residual cobalt. This is not only interesting for economic, but also for ecological reasons.

CoO in the slag should preferably be limited to less than 1%, more preferably to less than 0.5%. This reduces losses of this valuable metal, and prepares the slag for safe disposal in landfills, once it is no longer reused.

The following examples are provided to further illustrate embodiments of the present invention.

### Example 1

The dissolution of MgO from the walls of magnesia-bearing crucibles was measured, when using several different slag compositions. Various compounds contained in Li-ion batteries or their waste, respectively their oxides such as FeO, Al₂O₃, Li₂O, MnO, and P₂O₅ were melted together with CaO and SiO₂ as fluxing agents in a 1L MgO crucible. The total weight of added oxides was 1000 g.

The crucibles were gradually heated at heating rate of 150 °C/h using an induction furnace. When the slags were fully molten, crucibles were kept at temperatures of 1500 or 1650°C. After 2 h of heating, molten slags were taken out of the crucibles, and quenched with water. Table 1 lists the composition of the produced slags in this example.

**Table 1: Composition of the produced slags**

| **Slag** | **Temp. °C** | **Composition (%)** | | | | | | | |
|---|---|---|---|---|---|---|---|---|---|
| | | **SiO₂** | **FeO** | **Al₂O₃** | **CaO** | **Li₂O** | **MgO** | **MnO** | **P₂O₅** |
| 1-1 | 1500 | 15.2 | 0.0 | 25.8 | 22.2 | 7.5 | 3.3 | 25.2 | 0.8 |
| 1-2 | 1500 | 19.8 | 1.0 | 17.3 | 10.4 | 11.9 | 3.0 | 34.5 | 2.0 |
| 1-3 | 1650 | 6.3 | 1.9 | 17.9 | 12.5 | 12.9 | 1.1 | 44.3 | 3.1 |

MgO concentrations in above slags were relatively low. This result indicates that a dissolution of MgO from the wall of the crucible was well-suppressed under the chosen conditions.

(CaO + 2 Li₂O + 0.4 MnO) / SiO₂ was 2.9 in slag 1-1, 2.2 in slag 1-2 and 9.0 in slag 1-3.

The experiments were performed with slag compositions having no Ni, Co or Cu, since the amount of these metals in the final slags are typically very low and thus essentially do not influence the slag properties.

### Comparative Example 2

The dissolution of MgO from the walls of magnesia-bearing crucibles was measured, when using different slag compositions. Various compounds contained in Li-ion batteries or their waste, respectively their oxides such as FeO, Al₂O₃, Li₂O, MnO, and P₂O₅ were melted together with CaO and SiO₂ as fluxing agents, in a 1L MgO crucible. The total weight of added oxides was 1000 g.

The crucibles were gradually heated at a heating rate of 150 °C/h using an induction furnace. When the slags were fully molten, crucibles were kept at temperatures of 1500 °C for 2 h. After 2 h of heating, molten slags were taken out of the crucibles, and quenched with water. Table 2 lists the composition of the produced slags in this example.

**Table 2: Composition of the produced slags**

| **Slag** | **Temp. °C** | **Composition (%)** | | | | | | | |
|---|---|---|---|---|---|---|---|---|---|
| | | **SiO₂** | **FeO** | **Al₂O₃** | **CaO** | **Li₂O** | **MgO** | **MnO** | **P₂O₅** |
| 2-1 | 1500 | 28.6 | 0.0 | 29.1 | 20.5 | 5.6 | 9.0 | 6.5 | 0.8 |
| 2-2 | 1500 | 31.6 | 0.0 | 22.6 | 15.8 | 9.0 | 15.7 | 4.5 | 0.8 |

Compared to the slags used in Example 1, here the MnO content in the slags was adjusted to be lower than 10 %. (CaO + 2 Li₂O + 0.4 MnO) / SiO₂ was 1.2 in slag 2-1 and 1.1 in slag 2-2. Measured MgO concentrations in above slags were relatively high (from 9.0 % to 15.7 %), which indicates that relatively large quantities of MgO from the crucibles were dissolved in the respective slags. As in Example 1, the slags contained no Ni, Co or Cu.

### Discussion of Examples 1 and 2

The slags obtained in Example 1 contained less MgO than the slags obtained in Comparative Example 2. No visible degradation of the MgO crucible was observed under the conditions of Example 1, whereas the crucible walls became thinner under the conditions of Comparative Example 2. Slags containing relatively high concentrations of MnO suppressed the MgO dissolution, as demonstrated in Example 1. More specifically, the MgO dissolution into the slag was efficiently suppressed when the MnO concentration was 25% or higher.

### Example 3

500 kg of Black Mass was fed to a furnace with a diameter of 1 m, freshly lined with 200 mm chrome-magnesia refractory bricks. Slag with a composition according to Table 3, produced in an earlier smelting operation, was added together with the Black Mass, re-using it as slag former. A bath temperature of 1500-1550 °C was maintained, which is suitable to maintain both the slag and the alloy sufficiently fluid for easy tapping and handling. The heat was supplied by the oxidation of Al and C in the batteries, using submerged O₂ injection. The injection rate was chosen to achieve strongly reducing conditions, i.e. in this case a pO₂ of 10⁻⁹. Natural gas was added to compensate for heat losses in the furnace. After 1 h of heating, the produced alloy and slag were separated by tapping. During processing, small quantities of materials were captured as fume.

Table 3 shows the analyses of the input and output phases of the process.

**Table 3: Input and output phases of the process**

| **Input** | Mass (kg) | | **Composition (%)** | | | | | | | | | | |
|---|---|---|---|---|---|---|---|---|---|---|---|---|---|
| | | Ni | Co | Cu | Fe | SiO₂ | CaO | Al (Al₂O₃) | Li (Li₂O) | Mn (MnO) | P (P₂O₅) | C | MgO |
| Black Mass 2 | 500 | 16.5 | 5.6 | 0.8 | 0.2 | - | - | 3 | 2.5 | 5.7 | 0.1 | 48.0 | - |
| Slag former | 128 | 0.1 | 0.3 | 0.1 | 0.2 | 17.0 | 16.5 | (21.9) | (16.5) | (24.2) | (0.9) | - | 0.1 |
| **Output** | | | | | | | | | | | | | |
| Alloy | 119 | 69.1 | 23.2 | 3.2 | 0.9 | - | - | - | - | 3.6 | 0.3 | - | - |
| Slag | 208 | 0.1 | 0.3 | 0.1 | 0.2 | 10.4 | 10.0 | (26.8) | (20.1) | (29.4) | (0.9) | - | 1.4 |

During processing batteries, no visible degradation of the magnesia-bearing refractory bricks was observed. Concentration of MgO in the produced slag was only 1.4 %, equivalent to 0.1 kg loss of MgO from the refractory bricks, which is a very small degradation, thanks to the high MnO content in the slag. This slag thus efficiently suppressed the wear of the furnace wall made of magnesia-bearing refractory bricks.

### General conclusion

Metallurgical slags according to the present invention are suitable to recover valuable metals, such as Ni and Co, from Li-ion batteries or their waste, while minimizing degradation of the magnesia-bearing refractory bricks of the furnace.

## Claims

1. Process for the recovery of Ni and Co from Li-ion batteries or their waste, comprising the steps:
- providing a furnace lined with magnesia-bearing refractory bricks;
- providing a charge comprising slag formers and Li-ion batteries or their waste, wherein the content of Al in the charge is less than 8% by weight; and,
- smelting the charge in reducing conditions, thereby obtaining an alloy containing the major part of the Ni and Co, and a Li-containing slag, wherein the slag has a percent composition by weight according to:
25% < MnO < 70%;
Al₂O₃ + 0.5 MnO < 45%
SiO₂ > 5%;
Li₂O > 1%;
0.5% < P₂O₅ < 10%;
MnO + Li₂O + Al₂O₃ + CaO + SiO₂ + FeO + MgO + P₂O₅ > 90%; and,
wherein (CaO + 2 Li₂O + 0.4 MnO) / SiO₂ ≥ 2.0.

2. Process according to claim 1, wherein the content of MnO in the slag is 30% by weight or more.

3. Process according to claim 1 or 2, wherein the content of Al₂O₃ in the slag is less than 30% by weight.

4. Process according to any one of claims 1 to 3, wherein the Li-ion batteries or their waste is Black Mass.

5. Process according to any one of claims 1 to 4, wherein the content of CaO in the slag is 40% or less, preferably 30% by weight or less.

6. Process according to any one of claims 1 to 5, wherein the content of Li₂O in the slag is more than 3% by weight.

7. Process according to any one of claims 1 to 6, wherein the content of cobalt oxide in the slag is 0.05% < CoO < 1% by weight.

8. Process according to any one of claims 1 to 7, wherein the content of Fe in the slag is 25% by weight or less, preferably 10% by weight or less.

9. Process according to any one of claims 1 to 8, wherein the content of Fe in the charge is 5% by weight or less.

10. Process according to any one of claims 1 to 9, wherein the step of smelting the charge is performed at a temperature of at least 1400 ° C and at most 300 ° C above the liquidus point of the slag, preferably at most 100 ° C above the liquidus point of the slag, thereby avoiding overheating.

11. Process according to any one of claims 1 to 10, the smelting step comprising the further steps:
- sampling the slag;
- cooling down the slag sample and assessing its color; and,
- in case the slag sample is green, terminating the smelting step; or,
- in case the slag sample is not green, proceeding with the smelting step after adjusting the pO₂-level to achieve more reducing conditions.

12. Process according to any one of claims 1 to 11, wherein the pO₂-level is adjusted to 10⁻⁷ > pO₂ > 10⁻¹², preferably to pO₂ < 10⁻⁸, more preferred to pO₂ < 10^{-8.5}, and most preferred to pO₂ < 10⁻⁹.

13. Process according to claims 11 or 12, wherein the color of the slag is green according to standard ASTM D1535-14.

14. Process according to any one of claims 1 to 13, wherein the furnace is an electric furnace.

15. Li-containing metallurgical slag having a percent composition by weight according to:$25 % < MnO < 70 % ;$ ${Al}_{2} {O}_{3} + 0.5 MnO < 45 %$${SiO}_{2} > 5 % ;$${Li}_{2} O > 3 % ;$$0.5 % < {P}_{2} {O}_{5} < 10 % ;$$MnO + {Li}_{2} O + {Al}_{2} {O}_{3} + CaO + {SiO}_{2} + FeO + MgO + {P}_{2} {O}_{5} > 90 % ;$and,
wherein (CaO + 2 Li₂O + 0.4 MnO)/SiO₂ ≥ 2.0.

16. Li-containing metallurgical slag according to claim 15, wherein the color of the slag is green according to standard ASTM D1535-14.

17. Li-containing metallurgical slag according to claim 15 or 16, wherein the content of MnO in the slag is 30% by weight or more, preferably 40% by weight or more.

18. Li-containing metallurgical slag according to any one of claims 15 to 17, wherein the content of Al₂O₃ in the slag is less than 30% by weight.

19. Li-containing metallurgical slag according to any one claims 15 to 17, wherein the content of CaO in the slag is 40% by weight or less, preferably 30% by weight or less.

20. Li-containing metallurgical slag according to any one of claims 15 to 19, wherein the content of Fe in the slag is 25% by weight or less, preferably 10% by weight or less.

21. Use of the Li-containing metallurgical slag according to any one of claims 15 to 20 as slag former in a pyrometallurgical recycling process.

22. Use of the Li-containing metallurgical slag according to any one of claims 15 to 20 as slag former in the process according to any one of claims 1 to 14, thereby partially or fully replacing slag formers in the step of providing a charge comprising slag formers.

23. Use of the Li-containing metallurgical slag according to any one of claims 15 to 20 in a process for the recovery of lithium.

24. Li-containing metallurgical slag according to any one of claims 15 to 20, wherein the slag further contains cobalt.

25. Use of the metallurgical slag according to claim 24 in a process for the recovery of cobalt.

## Patentansprüche

1. Verfahrens zur Rückgewinnung von Ni und Co aus Li-Ionen-Batterien oder deren Abfall, umfassend die folgenden Schritte:
- Bereitstellen eines mit magnesiahaltigen feuerfesten Steinen ausgekleideten Ofens;
- Bereitstellen einer Charge, die Schlackenbildner und Li-Ionen-Batterien oder deren Abfall umfasst, wobei der Al-Gehalt in der Charge weniger als 8 Gew.-% beträgt; und
- Schmelzen der Charge unter reduzierenden Bedingungen, wodurch eine Legierung, die den Hauptteil des Ni und Co enthält, und eine Li-haltige Schlacke erhalten werden, wobei die Schlacke eine prozentuale Zusammensetzung nach Gewicht gemäß 25% < MnO < 70%;
Al₂O₃ + 0.5 MnO < 45%
SiO₂ > 5%;
Li₂O > 1%;
0.5% < P₂O₅ < 10%;
MnO + Li₂O + Al₂O₃ + CaO + SiO₂ + FeO + MgO + P₂O₅ > 90%; und
wobei (CaO + 2 Li₂O + 0.4 MnO) / SiO₂ ≥ 2.0.

2. Verfahren nach Anspruch 1, wobei der Gehalt an MnO in der Schlacke 30 Gew.-% oder mehr beträgt.

3. Verfahren nach Anspruch 1 oder 2, wobei der Gehalt an Al₂O₃ in der Schlacke weniger als 30 Gew.-% beträgt.

4. Verfahren nach einem der Ansprüche 1 bis 3, wobei es sich bei den Li-Ionen-Batterien oder deren Abfall um Black Mass handelt.

5. Verfahren nach einem der Ansprüche 1 bis 4, wobei der Gehalt an CaO in der Schlacke 40 Gew.-% oder weniger, vorzugsweise 30 Gew.-% oder weniger beträgt.

6. Verfahren nach einem der Ansprüche 1 bis 5, wobei der Gehalt an Li₂O in der Schlacke mehr als 3 Gew.-% beträgt.

7. Verfahren nach einem der Ansprüche 1 bis 6, wobei der Gehalt an Kobaltoxid in der Schlacke 0,05 Gew.-% < CoO < 1 Gew.-% beträgt.

8. Verfahren nach einem der Ansprüche 1 bis 7, wobei der Gehalt an Fe in der Schlacke 25 Gew.-% oder weniger, vorzugsweise 10 Gew.-% oder weniger beträgt.

9. Verfahren nach einem der Ansprüche 1 bis 8, wobei der Gehalt an Fe in der Charge 5 Gew.-% oder weniger beträgt.

10. Verfahren nach einem der Ansprüche 1 bis 9, wobei der Schritt des Schmelzens der Charge bei einer Temperatur von mindestens 1400 °C und höchstens 300 °C über dem Liquiduspunkt der Schlacke, vorzugsweise höchstens 100 °C über dem Liquiduspunkt der Schlacke, durchgeführt wird, wodurch eine Überhitzung vermieden wird.

11. Verfahren nach einem der Ansprüche 1 bis 10, wobei der Schmelzschritt die weiteren Schritte umfasst:
- Entnahme einer Schlackenprobe;
- Abkühlen der Schlackeprobe und Beurteilen ihrer Farbe; und
- falls die Schlackenprobe grün ist, Beenden des Schmelzschritts; oder
- falls die Schlackenprobe nicht grün ist, Fortsetzung des Schmelzschritts nach Anpassung des pO₂-Wertes, um reduzierendere Bedingungen zu erreichen.

12. Verfahren nach einem der Ansprüche 1 bis 11, wobei der pO₂-Wert auf 10⁻⁷ > pO₂ > 10⁻¹² eingestellt wird, vorzugsweise auf pO₂ < 10⁻⁸, noch bevorzugter auf pO₂ < 10^{-8,5} und am meisten bevorzugt auf pO₂ < 10⁻⁹.

13. Verfahren nach Anspruch 11 oder 12, wobei die Farbe der Schlacke gemäß der Norm ASTM D1535-14 grün ist.

14. Verfahren nach einem der Ansprüche 1 bis 13, wobei es sich bei dem Ofen um einen Elektroofen handelt.

15. Li-haltige metallurgische Schlacke mit einer prozentualen Zusammensetzung nach Gewicht gemäß: $25 % < MnO < 70 % ;$${Al}_{2} {O}_{3} + 0.5 MnO < 45 %$${SiO}_{2} > 5 % ;$${Li}_{2} O > 3 % ;$$0.5 % < {P}_{2} {O}_{5} < 10 % ;$$MnO + {Li}_{2} O + {Al}_{2} {O}_{3} + CaO + {SiO}_{2} + FeO + MgO + {P}_{2} {O}_{5} > 90 % ;$und
wobei (CaO + 2 Li₂O + 0.4 MnO)/SiO₂ ≥ 2.0.

16. Li-haltige metallurgische Schlacke nach Anspruch 15, wobei die Farbe der Schlacke gemäß der Norm ASTM D1535-14 grün ist.

17. Li-haltige metallurgische Schlacke nach Anspruch 15 oder 16, wobei der Gehalt an MnO in der Schlacke 30 Gew.-% oder mehr, vorzugsweise 40 Gew.-% oder mehr beträgt.

18. Li-haltige metallurgische Schlacke nach einem der Ansprüche 15 bis 17, wobei der Gehalt an Al₂O₃ in der Schlacke weniger als 30 Gew.-% beträgt.

19. Li-haltige metallurgische Schlacke nach einem der Ansprüche 15 bis 18, wobei der Gehalt an CaO in der Schlacke 40 Gew.-% oder weniger, vorzugweise 30 Gew.-% oder weniger beträgt.

20. Li-haltige metallurgische Schlacke gemäß einem der Ansprüche 15 bis 19, wobei der Gehalt an Fe in der Schlacke 25 Gew.-% oder weniger, vorzugsweise 10 Gew.-% oder weniger beträgt.

21. Verwendung der Li-haltigen metallurgischen Schlacke gemäß einem der Ansprüche 15 bis 20 als Schlackenbildner in einem pyrometallurgischen Recyclingverfahren.

22. Verwendung der Li-haltigen metallurgischen Schlacke gemäß einem der Ansprüche 15 bis 20 als Schlackenbildner in dem Verfahren gemäß einem der Ansprüche 1 bis 14, wodurch Schlackenbildner in dem Schritt der Beretstellung einer Charge, die Schlackenbildner umfasst, teilweise oder vollständig ersetzt werden.

23. Verwendung der Li-haltigen metallurgischen Schlacke gemäß einem der Ansprüche 15 bis 20 in einem Verfahren zur Gewinnung von Lithium.

24. Li-haltige metallurgische Schlacke gemäß einem der Ansprüche 15 bis 20, wobei die Schlacke ferner Kobalt enthält.

25. Verwendung der metallurgischen Schlacke gemäß Anspruch 24 in einem Verfahren zur Rückgewinnung von Kobalt.

## Revendications

1. Procédé pour la récupération de Ni et de Co à partir de batteries Li-ion d' s ou de leurs déchets, comprenant les étapes suivantes :
- la mise en place d'un four revêtu de briques réfractaires contenant de la magnésie ;
- fournir une charge comprenant des agents de formation de laitier et des batteries Li-ion ou leurs déchets, dans laquelle la teneur en Al de la charge est inférieure à 8 % en poids ; et,
- la fusion de la charge dans des conditions réductrices, obtenant ainsi un alliage contenant la majeure partie du Ni et du Co, et un laitier contenant du Li, le laitier ayant une composition en pourcentage en poids selon :
25% < MnO < 70%;
Al₂O₃ + 0.5 MnO < 45%
SiO₂ > 5%;
Li₂O > 1%;
0.5% < P₂O₅ < 10%;
MnO + Li₂O + Al₂O₃ + CaO + SiO₂ + FeO + MgO + P₂O₅ > 90%; et,
dans lequel (CaO + 2 Li₂O + 0.4 MnO) / SiO₂ ≥ 2.0.

2. Procédé selon la revendication 1, dans lequel la teneur en MnO dans le laitier est de 30 % en poids ou plus.

3. Procédé selon la revendication 1 ou 2, dans lequel la teneur en Al₂O₃ dans le laitier est inférieure à 30 % en poids.

4. Procédé selon l'une quelconque des revendications 1 à 3, dans lequel les batteries lithium-ion ou leurs déchets sont de la «Black Mass».

5. Procédé selon l'une quelconque des revendications 1 à 4, dans lequel la teneur en CaO dans les scories est de 40 % ou moins, de préférence de 30 % en poids ou moins.

6. Procédé selon l'une quelconque des revendications 1 à 5, dans lequel la teneur en Li₂O dans le laitier est supérieure à 3 % en poids.

7. Procédé selon l'une quelconque des revendications 1 à 6, dans lequel la teneur en oxyde de cobalt e dans le laitier est comprise entre 0,05 % et 1 % en poids.

8. Procédé selon l'une quelconque des revendications 1 à 7, dans lequel la teneur en Fe dans le laitier est de 25 % en poids ou moins, de préférence de 10 % en poids ou moins.

9. Procédé selon l'une quelconque des revendications 1 à 8, dans lequel la teneur en Fe dans la charge est de 5 % en poids ou moins.

10. Procédé selon l'une quelconque des revendications 1 à 9, dans lequel l'étape de fusion de la charge est réalisée à une température d'au moins 1400°C et d'au plus 300°C au-dessus du point de liquidus du laitier, de préférence d'au plus 100°C au-dessus du point de liquidus du laitier, évitant ainsi toute surchauffe.

11. Procédé selon l'une quelconque des revendications 1 à 10, l'étape de fusion comprenant les étapes supplémentaires suivantes :
- prélever un échantillon de laitier ;
- refroidir l'échantillon de laitier et évaluer sa couleur ; et,
- si l'échantillon de laitier est vert, mettre fin à l'étape de fusion ; ou,
- si l'échantillon de laitier n'est pas vert, poursuivre l'étape de fusion après avoir ajusté le niveau de pO₂ afin d'obtenir des conditions plus réductrices.

12. Procédé selon l'une quelconque des revendications 1 à 11, dans lequel le niveau de pO₂ est ajusté à 10⁻⁷ > pO₂ > 10⁻¹², de préférence à pO₂ < 10⁻⁸, plus préférablement à pO₂ < 10^{-8.5}, et le plus préférablement à pO₂ < 10⁻⁹.

13. Procédé selon l'une des revendications 11 ou 12, dans lequel la couleur du laitier est verte selon la norme ASTM D1535-14.

14. Procédé selon l'une quelconque des revendications 1 à 13, dans lequel le four est un four électrique.

15. Scories métallurgiques contenant du lithium, dont la composition en pourcentage en poids est la suivante :
25% < MnO < 70%;
Al₂O₃ + 0.5 MnO < 45%
SiO2 > 5%;
Li₂O > 3%;
0.5% < P₂O₅ < 10%;
MnO + Li₂O + Al₂O₃ + CaO + SiO₂+ FeO + MgO + P₂O₅ > 90%; et
dans lequel (CaO + 2 Li₂O + 0.4 MnO) / SiO₂ ≥ 2.0.

16. Scories mètallurgiques contenant du lithium selon la revendication 15, dans lesquelles la couleur des scories est verte selon la norme ASTM D1535-14.

17. Scories métallurgiques contenant du lithium selon la revendication 15 ou 16, dans lesquelles la teneur en MnO des scories est d'au moins 30 % en poids, de préférence d'au moins 40 % en poids.

18. Scories métallurgiques contenant du lithium selon l'une quelconque des revendications 15 à 17, dans lesquelles la teneur en Al₂O₃ des scories est inférieure à 30 % en poids.

19. Scories métallurgiques contenant du lithium selon l'une quelconque des revendications 15 à 18, dans lesquelles la teneur en CaO des scories est de 40 % en poids ou moins, de préférence de 30 % en poids ou moins.

20. Scories métallurgiques contenant du Li, selon l'une quelconque des revendications 15 à 19, dans lesquelles la teneur en Fe dans les scories est de 25 % en poids ou moins, de préférence de 10 % en poids ou moins.

21. Utilisation du laitier métallurgique contenant du Li selon l'une quelconque des revendications 15 à 20 en tant qu'agent de formation de laitier dans un procédé de recyclage pyrométallurgique.

22. Utilisation du laitier métallurgique contenant du Li selon l'une quelconque des revendications 15 à 20 en tant qu'agent de formation de laitier dans le procédé selon l'une quelconque des revendications 1 à 14, remplaçant ainsi partiellement ou totalement les agents de formation de laitier dans l'étape consistant à fournir une charge comprenant des agents de formation de laitier.

23. Utilisation du laitier métallurgique contenant du lithium selon l'une quelconque des revendications 15 à 20 dans un procédé de récupération du lithium.

24. Scories métallurgiques contenant du lithium selon l'une quelconque des revendications 15 à 20, dans lesquelles les scories contiennent en outre du cobalt.

25. Utilisation des scories métallurgiques selon la revendication 24 dans un procédé de récupération de cobalt.
